(19) **Europäisches Patentamt**
**European Patent Office**
**Office européen des brevets**

(11) **EP 4 726 983 A1**

(12) **EUROPEAN PATENT APPLICATION**

(43) Date of publication:
**15.04.2026 Bulletin 2026/16**

(51) International Patent Classification (IPC):
*H02M 1/00* (2006.01)    *H02M 1/32* (2007.01)
*H02M 3/156* (2006.01)

(21) Application number: **24306665.1**

(22) Date of filing: **10.10.2024**

(52) Cooperative Patent Classification (CPC):
**H02M 1/0025; H02M 1/32; H02M 3/156**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **NXP USA, Inc.**
**Austin TX 78735 (US)**

(72) Inventor: **Romeo, Dominique**
**31023 Toulouse (FR)**

(74) Representative: **Krott, Michel**
**NXP Semiconductors**
**Intellectual Property Group**
**High Tech Campus 60**
**5656 AG  Eindhoven (NL)**

Remarks:
Amended claims in accordance with Rule 137(2)
EPC.

(54) **CLAMPING AND REGULATION CIRCUITS AND TECHNIQUES FOR DIRECT CURRENT CONVERTERS**

(57)    The regulation and clamping functions are separated at a controller integrated circuit (IC) for a DC-DC converter. The controller IC includes a clamp circuit configured to clamp the voltage at a pin of the controller IC that is connected to external compensation circuitry. The controller IC further includes a different regulation circuit configured to regulate a clamp loop of the controller IC.

**FIG. 2**

# Description

## BACKGROUND

Direct current (DC) to direct current converters (referred to as DC-DC converters) are used in a wide variety of electronic systems and devices. For example, automobiles sometimes include one or more DC-DC converters to convert a voltage provided by a battery or other power source to one or more electronic systems (e.g., radar systems, entertainment systems) of the automobile. The DC-DC converters typically include controller circuitry to ensure that the voltage provided to the corresponding system falls within a specified voltage range. For example, a DC-DC converter can include an integrator feedback loop that integrates an error value representing the difference between a feedback signal generated by the converter circuitry and a reference voltage. Based on the integrated error value, controller circuitry sets the adjustment (amplification or attenuation) of the DC input voltage by the converter circuitry so that the DC output voltage falls within the specified range.

The frequency response of the feedback loop varies according to the range of the DC input voltage and the specified range of the DC output voltage. Accordingly, to ensure stability of the feedback loop, the controller and converter circuitry is typically connected to a compensation circuit. Furthermore, the compensation circuit is typically external to a controller integrated circuit (IC) that includes the controller and converter circuitry, allowing the controller IC to be used in a variety of electronic systems and devices. The controller IC includes clamping circuitry to clamp the error signal when the error signal is outside of specified regulation conditions (e.g., because of peak current limitations or an overvoltage condition). However, existing approaches to the clamping circuitry and the integrator feedback loop can result in circuitry and can result in circuit damage when the external compensation circuit is shorted to a ground voltage.

## SUMMARY

In accordance with a first aspect of the present disclosure, a device is provided, comprising: a direct current (DC)-DC converter circuit including a feedback loop, the feedback loop including: a clamp circuit configured to clamp an error signal of the DC-DC converter circuit to a specified clamp voltage in response to a magnitude of the error signal exceeding a predetermined threshold; and a regulation circuit, different from the clamp circuit, configured to regulate a clamp loop of the DC-DC converter circuit.

In one or more embodiments, the DC-DC converter circuit is part of an integrated circuit device; and the regulation circuit is configured to regulate a voltage at an internal node of the integrated circuit device.

In one or more embodiments, the clamp circuit is configured to clamp the error signal at a pin of the integrated circuit device.

In one or more embodiments, the pin of the integrated circuit device is configured to be coupled to an external compensation circuit for the DC-DC converter circuit.

In one or more embodiments, the regulation circuit is independent of the external compensation circuit.

In one or more embodiments, the clamp circuit comprises a first source follower circuit, and the regulation circuit comprises a second source follower circuit.

In one or more embodiments, the clamp circuit comprises: a first transistor including a source electrode coupled to the pin, a drain electrode, and a gate electrode; and a second transistor including a source electrode coupled to the pin, a gate electrode, and a drain electrode coupled to a ground voltage reference.

In one or more embodiments, the regulation circuit comprises: a third transistor including a source electrode coupled to the internal node, a drain electrode coupled to the drain electrode of the first transistor, and a gate electrode coupled to the gate electrode of the first transistor; and a fourth transistor including a source electrode coupled to the internal node, a drain electrode coupled to the ground voltage reference, and a gate electrode coupled to the gate electrode of the second transistor.

In one or more embodiments, the regulation circuit further comprises: a first amplifier including an input to receive a first voltage reference, an input coupled to the internal node, and an output connected to the gate electrode of the third transistor and the gate electrode of the first transistor.

In one or more embodiments, the regulation circuit further comprises: a second amplifier including an input to receive a second voltage reference, an input coupled to the internal node, and an output connected to the gate electrode of the fourth transistor and the gate electrode of the second transistor.

In one or more embodiments, the device further comprises: a fifth transistor including a source electrode, a drain electrode coupled to the internal node electrode of the first transistor, and a gate electrode coupled to a first output of an integrator; a sixth transistor including a source electrode coupled to the internal node, a drain electrode, and a gate electrode coupled to a second output of the integrator; a seventh transistor including a source electrode coupled to the source electrode of the fifth transistor, a drain electrode coupled to the pin, and a gate electrode coupled to the first output of the integrator; an eighth transistor including a source electrode coupled to the pin, a drain electrode coupled to the drain electrode of the sixth transistor, and a gate electrode coupled to the second output of the integrator; a ninth transistor including a source electrode coupled to the source electrode of the fifth transistor, a drain electrode coupled to the first output of the integrator, and a gate electrode coupled to the first output of the integrator; and an eighth transistor including a source electrode coupled to second output of the integrator, a drain electrode coupled to the drain electrode of the sixth transistor, and a gate electrode coupled to the second output of the integrator.

In one or more embodiments, the first and third transistors are matched by a ratio of K: 1 and the second and fourth transistors are matched by the ratio of K: 1.

In accordance with a second aspect of the present disclosure, an integrated circuit device is provided, comprising: an inductor-capacitor (LC) circuit configured to convert a direct current (DC) input voltage to a DC output voltage, and to generate a feedback signal for a feedback loop; an integrator to generate an integrated signal based on the feedback signal; a clamp circuit configured to clamp an error signal at the DC-DC converter circuit in response to a magnitude of the error signal exceeding a predetermined threshold, wherein the error signal is based on the integrated signal; and a regulation circuit, different from the clamp circuit, configured to regulate a voltage for a clamp loop of integrated circuit device.

In one or more embodiments, the regulation circuit is configured to regulate the voltage at an internal node of the integrated circuit device.

In one or embodiments, the clamp circuit is configured to clamp the error signal at a pin of the integrated circuit device.

In one or more embodiments, the pin of the integrated circuit device is configured to be coupled to a compensation circuit for the DC-DC converter circuit.

In one or more embodiments, the clamp circuit comprises a first source follower circuit, and the regulation circuit comprises a second source follower circuit.

In one or more embodiments, the clamp circuit comprises: a first transistor including a source electrode coupled to the pin, a drain electrode, and a gate electrode; and a second transistor including a source electrode coupled to the pin, a gate electrode, and a drain electrode coupled to a ground voltage reference.

In one or more embodiments, the regulation circuit comprises: a third transistor including a source electrode coupled to the internal node, a drain electrode coupled to the drain electrode of the first transistor, and a gate electrode coupled to the gate electrode of the first transistor; and a fourth transistor including a source electrode coupled to the internal node, a drain electrode coupled to the ground voltage reference, and a gate electrode coupled to the gate electrode of the second transistor.

In accordance with a third aspect of the present disclosure, a method is conceived, comprising: converting a first direct current to a second direct current at a DC-DC converter circuit including a feedback loop; clamping, at a clamp circuit, an error signal at the DC-DC converter circuit in response to a magnitude of the error signal exceeding a predetermined threshold; and regulating, at a regulation circuit different from the clamp circuit, a voltage at a clamp loop of the DC-DC converter circuit.

BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.

FIG. 1 is a block diagram of a DC-DC converter system that employs separate regulation and clamping functions in accordance with some embodiments.

FIG. 2 is a combined circuit and block diagram illustrating additional details of the DC-DC converter system of FIG. 1 in accordance with some embodiments.

FIG. 3 is a set of signal diagrams illustrating operation of the regulation and clamping circuitry of the DC-DC converter system of FIG. 1 in accordance with some embodiments.

FIG. 4 is a flow diagram illustrating a method of regulating and clamping an error signal at a DC-DC converter system using separate regulation and clamping circuitry in accordance with some embodiments.

DETAILED DESCRIPTION

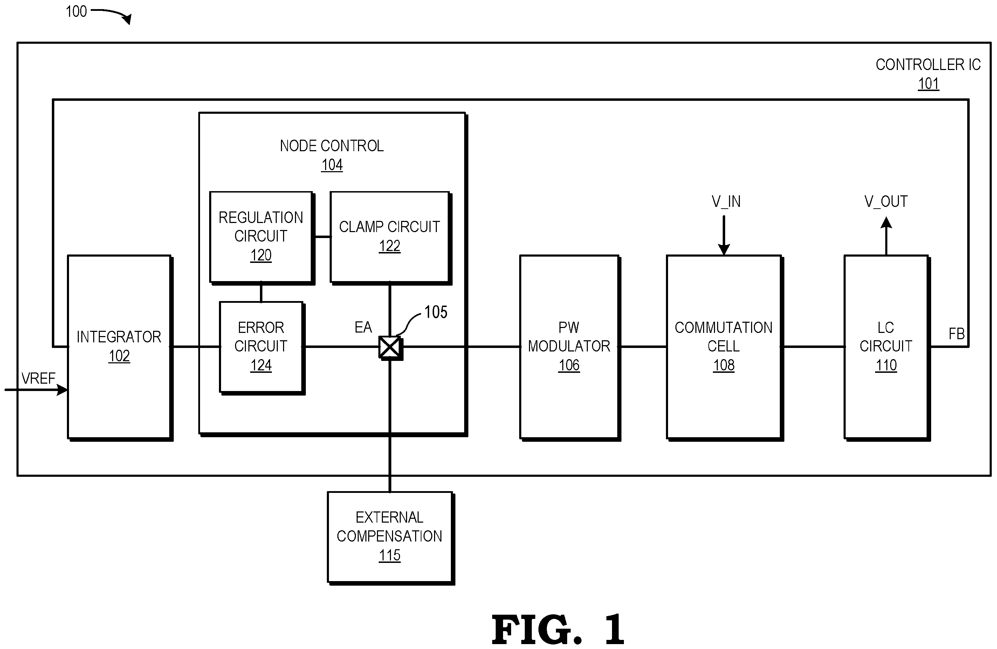

FIGs. 1-4 illustrate techniques for controlling the operation of a DC-DC converter using circuitry that separates a clamping function for an error signal from a regulation function for the error signal. By separating the functionality in the circuitry in this way, a controller IC is able to accommodate a wide variety of external compensation circuits, and thus a wide variety of specified input and output voltages for the DC-DC converter. In addition, the controller IC is protected during conditions, such as defective IC pin, where the external compensation circuit is shorted to a ground voltage.

To illustrate, many controller ICs implement a DC-DC converter together with a feedback loop including an integrator (e.g. a transconductance, or gm, based integrator). The integrator generates an error signal based on the difference between a feedback signal representing the output voltage of the converter, and a pulse width modulator (PWM) circuit controls a commutation circuit based on the error signal. The commutation circuit, in turn, adjusts the output voltage of the converter so that the output voltage is maintained within a specified range. To support the stability of the feedback loop, the controller IC is connected, via a pin of the IC, to an external compensation circuit. In particular, the pin is connected to an internal node that carries the error signal generated by the integrator. Furthermore, the internal node is connected to clamping circuitry that performs two operations: 1) clamping of the error signal when the error signal falls outside of specified conditions (referred to as regulation conditions); and 2) regulation of a clamping loop that ensures predictable behavior of the clamping operation. For example, the regulation operation of the clamping circuitry ensures that the clamping circuit does not clamp the error signal when the error signal is within the regulation conditions. Conventional controller ICs employ a clamping circuit, such as a source follower amplifier, that performs both the regulation operations and the clamping operations. However, these conventional approaches suffer from at least two different problems. First, these circuits can negatively impact the stability of the clamping loop, especially when the external compensation circuit varies widely between different devices. This in turn can lead to unpredictable and undesirable circuit behavior (such as clamping the error signal at an undesirably low threshold voltage or current). Second, if the controller IC pin is defective, or if the pin is otherwise shorted to a ground reference, the clamp operation may not be performed, causing the circuitry of the controller IC can be damaged.

FIGs 1-4 illustrate techniques for separating the regulation and clamping operations at a controller IC for a DC-DC converter in accordance with some embodiments. For example, in some embodiments the controller IC includes a clamp circuit including a source follower circuit configured to clamp the voltage at a pin of the controller IC, when an error signal at the pin falls outside of regulation conditions. The controller IC further includes a regulation circuit including a different source follower circuit arranged in a loop (referred to as clamping loop) and to an internal node of the controller IC, wherein the internal node is connected to the integrator output of the controller IC. Furthermore, the transistors of the two source followers are matched, and the gate electrodes of the two source follower circuits are connected. The regulation circuit thus performs clamp regulation based on a voltage at the internal node, such that the clamp loop for the DC-DC converter is relatively easy to stabilize, even for a wide variety of external compensation circuits. Furthermore, because the transistors of the two source followers are matched, the clamp circuit source follower is provided with an accurate copy of the current at the internal node, thus providing for accurate clamping. In addition, the current of the clamping source follower is naturally limited in the case of a short at the IC pin, thus protecting the controller circuitry.

FIG. 1 illustrates a DC-DC converter system 100 in accordance with some embodiments. The DC-DC converter system 100 is generally configured to convert an input voltage, designated V_IN, to an output voltage, designated V_OUT. In some embodiments, the DC-DC converter system 100 is a "boost" system that increases the DC voltage (so V_OUT has a greater magnitude than V_IN), while in other embodiments the DC-DC converter system is a "buck" system that decreases the DC voltage (such that V_OUT has a lower magnitude that V_IN). Thus, in different embodiments, the DC-DC converter system 100 is part of any electronic device that employs a converter to change a DC voltage. For example, in some embodiments the DC-DC converter system 100 is part of an automobile, wherein the voltage V_IN is provided by a power source, such as a battery, and the voltage V_OUT is provided to another automotive system, such as an entertainment system, a radar system, a telematics system, and the like.

To support conversion of the voltage V_IN, the DC-DC converter system 100 includes a controller integrated circuit (IC) 101 and an external compensation circuit 115. As described further below, the controller IC 101 includes circuitry (that is, one or more circuits) arranged in a feedback loop, and collectively configured to generate the voltage V_OUT based on the input voltage V_IN. The external compensation circuit 115 is connected to a pin 105 of the controller IC 101, and is a circuit configured to stabilize the feedback loop of the controller IC 101 for a specified range of input voltages (that is, a specified range for V_IN) and a specified range of output voltages (that is, a specified range for V_OUT). Thus, for example, in some embodiments the external compensation circuit 115 includes a first adjustable capacitor connected between the pin 105 and a ground voltage (also referred to as a ground reference) and includes a resistor and a second adjustable capacitor connected in series between the pin 105 and the ground voltage (and thus in parallel with the first adjustable capacitor). During configuration of the DC-DC converter system 100, the size of the resistor and adjustable capacitors are selected based on the specified input and output voltage ranges to stabilize the feedback loop of the controller IC 101.

To generate the voltage V_OUT based on the voltage V_IN, the controller IC includes an integrator 102, a node control module 104, a pulse-width modulator (PWM) 106, a commutation cell 108 and an inductor-capacitor (LC) circuit 110, arranged in a feedback loop. In particular, the commutation cell 108 includes an input to receive the input voltage V_IN, a second input, and an output. The LC circuit 110 includes an input connected to the output of the commutation cell 108, an output to generate the output voltage V_OUT, and an output to generate a feedback signal, designated FB. In at least some embodiments, the feedback signal FB is a signal that represents the magnitude of the voltage V_OUT, but at a lower voltage magnitude. The integrator 102 includes an input to receive the feedback signal FB and an input to receive a reference voltage, designated VREF, and an output. The node control module 104 includes an input connected to the output of the integrator 102 and an output. The PWM includes an input connected to the output of the node control module 104 and an output connected to the second input of the commutation cell 108, thus completing the feedback loop.

The LC circuit 110 and commutation cell 108 together are configured to generate the voltage V_OUT based on the voltage V_IN. The LC circuit 110 includes one or more inductors and capacitors arranged in a circuit to increase (boost), decrease (buck), or increase and decrease (boost and buck) an input voltage. The particular arrangement of the components of the LC circuit 110 depend on the desired adjustment to the input voltage. The commutation cell 108 includes one or more switches arranged to selectively apply the voltage V_IN to the input of the LC circuit 110. Thus, when the one or more switches are in a specified state (e.g., a closed state), the voltage V_IN is applied to the input of the LC circuit 110, and when the one or more switches are in a different state (e.g., an open state), the voltage V_IN is not applied to the input of the LC circuit 110. Thus, the magnitude of the voltage V_OUT is based on both the magnitude of the voltage V_IN, and the amount of time the one or more switches are placed in the various states.

The state of the one or more switches of the commutation cell 108 is controlled by the output signal of the PWM 106. In particular, when the state of output signal of the PWM 106 is a first state (e.g., an asserted state), the one or more switches of the commutation cell 108 are placed in a corresponding state, and when the state of the output signal of the PWM 106 is in a second state (e.g., a negated state), the one or more switches of the commutation cell 108 are placed in a different corresponding state. Accordingly, the magnitude of the voltage V_OUT is controlled by the pulse width of the output signal of the PWM 106. This pulse width, in turn, is controlled by an error signal, designated EA, at the pin 105.

The error signal EA is generated by the interactions of the integrator 102, the circuits of the node control module 104, and the external compensation circuit 115. The integrator 102 is an integrator circuit, such as an operational amplifier with inputs connected to the inputs of the integrator 102, and output connected to the output of the integrator 102, and a capacitor connected between the output of the operational amplifier and the ground voltage. The integrator circuit is configured to determine the difference between the feedback signal FB and a reference voltage designated VREF. The reference voltage VREF is generated by a stable voltage source (not shown) and during configuration of the controller IC 101 is set to a magnitude that will set the voltage V_OUT to a specified magnitude (or magnitude range).

The integrator circuit integrates the determined difference to generate a signal (i.e., an "integrated signal"), and provides the integrated signal to the node control module 104. Based on the integrated signal, and as described further below, the node control module 104 generates the error signal EA and provides the error signal EA to the PWM 106. Thus, in operation, the controller IC 101 measures the difference between the feedback signal FB and the voltage VREF, integrates the measured difference over time, generates an error signal EA based on the integrated difference, and adjusts the magnitude of the voltage V_OUT based on the error signal EA. The controller IC 101 thus ensures that the magnitude of the voltage V_OUT is maintained at a specified level, or within a specified range.

The node control module 104 includes circuitry to perform at least three operations, together with the external compensation circuit 115: 1) generation of the error signal EA based on the output of the integrator 102; 2) regulation of one or more clamping circuitry loops to maintain loop stability and thus support predictable behavior of the clamping function; and 3) clamping of the error signal EA to protect the circuitry of the controller IC 101. To perform these operations, the node control module 104 includes a regulation circuit 120, a clamp circuit 122, and an error circuit 124. The error circuit 124 is a circuit, such as a source follower and accompanying matched transistors as described further below, configured to generate one or more currents that represent the differential output of the integrator 102.

The clamp circuit 122 is a circuit, such as a source follower circuit, that clamps the error signal EA when the magnitude of the error signal EA falls outside of specified regulation conditions (e.g., due to a short resulting from a defect at the pin 105). For example, in response to the magnitude of the error signal exceeding a predefined threshold, the clamp circuit 122 may be configured to clamp the error signal to a specified clamp voltage. The clamp circuit 122 thus protects the circuitry of the controller IC 101 from short circuit conditions. The regulation circuit 120 is a circuit, such as a source follower circuit, that regulates the error signal EA to ensure clamp loop stability, thus ensuring that the clamp circuit 122 does not clamp the error signal EA when the error signal EA is within the specified regulation conditions. In some embodiments, the regulation circuit 120 performs this regulation at an internal node of the circuit, rather than at the pin 105. This supports easier stabilization of the feedback loop and allows the regulation to be independent of the external compensation circuit 115.

Furthermore, the clamping function of the clamp circuit 122 is separate from the regulation function of the regulation circuit 120. For example, the clamping function is performed using different transistors, and based on the voltage at different nodes of the node control module 104, than the transistors and nodes of the regulation circuit 120. This provides for easier loop stability across a wide range of external compensation circuits, while also providing for good protection of the controller IC 101 against short circuit conditions.

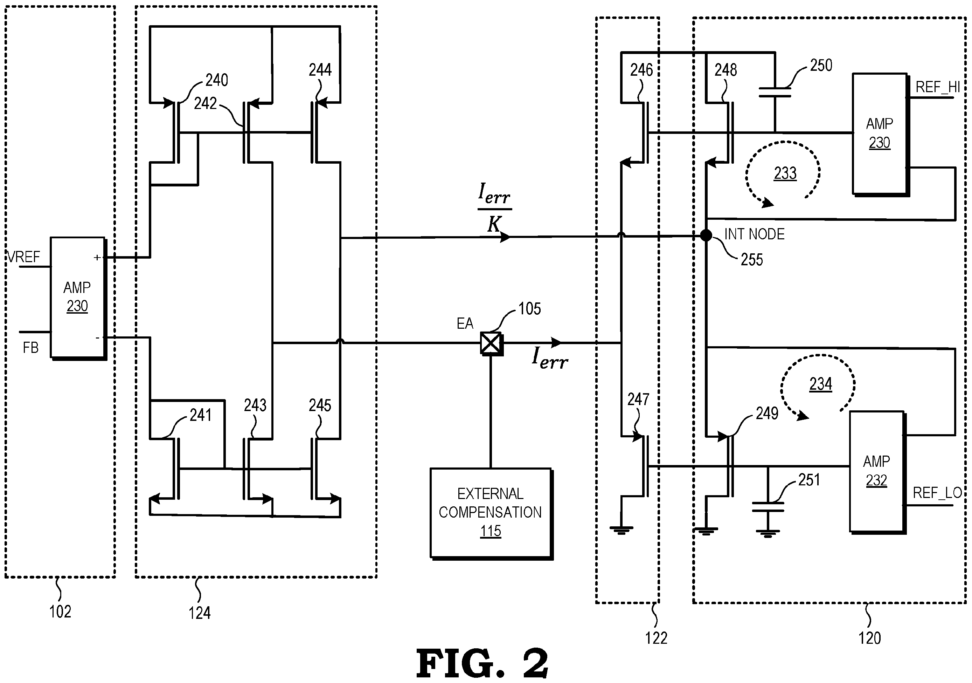

FIG. 2 is a combined circuit and block diagram illustrating additional details of various circuits of the controller IC 101 in accordance with some embodiments. In particular, FIG. 2 illustrates additional details of the integrator 102, the error circuit 124, the regulation circuit 120, and the clamping circuit 122 in accordance with some embodiments. In the illustrated example, the integrator 102 includes a differential amplifier 230 including an input to receive the voltage VREF, and input to receive the feedback signal FB, a positive output electrode, and a negative output electrode.

The error circuit 124 includes p-channel transistors 240, 242, and 244, and n-channel transistors 241, 243, and 245. The transistor 240 includes a source electrode, a drain electrode connected to the positive output electrode of the amplifier 230, and gate electrode connected to the drain electrode of the transistor 240. The transistor 241 includes a drain electrode connected to the negative output electrode of the amplifier 230, a source electrode, and a gate electrode connected to the drain electrode of the transistor 241. The transistor 242 includes a source electrode connected to the source electrode of the transistor 240, a drain electrode, and a control electrode connected to the drain electrode of the transistor 240. The transistor 243 includes a drain electrode connected to the drain electrode of the transistor 242, a source electrode connected to the source electrode of the transistor 241, and a gate electrode connected to the drain electrode of the transistor 241. The transistor 244 includes a source electrode connected to the source electrode of the transistor 240, a drain electrode, and a control electrode connected to the drain electrode of the transistor 240. The transistor 245 includes a drain electrode connected to the drain electrode of the transistor 244, a source electrode connected to the source electrode of the transistor 241, and a gate electrode connected to the drain electrode of the transistor 241. The drain electrodes of the transistors 242 and 243 are connected to the pin 105.

The clamp circuit 122 includes an n-channel transistor 246 and a p-channel transistor 247. The transistor 246 includes a drain electrode, a source electrode connected to the pin 105, and a gate electrode. The transistor 247 includes a source electrode connected to the pin 105, a gate electrode, and a drain electrode connected to a ground voltage reference. The regulation circuit 120 includes amplifiers 230 and 232, capacitors 250 and 251, an internal node 255, an n-channel transistor 248, and a p-channel transistor 249. The internal node 255 is connected to the drain electrode of the transistor 244 and the drain electrode of the transistor 245. The amplifier 230 includes a first input to receive a voltage designated REF_HI, a second input connected to the internal node 255, and an output. The amplifier 230 includes a first input to receive a voltage designated REF_LO, a second input connected to the internal node 255, and an output. The internal node 255 is separate from the external compensation circuit 115.

The transistor 248 includes a drain electrode connected to the drain electrode of the transistor 246, a source electrode connected to the internal node 255, and a gate electrode connected to the output of the amplifier 230, and further connected to the gate electrode of the transistor 246. The transistor 249 includes a drain electrode connected to the ground reference voltage, a source electrode connected to the internal node 255, and a gate electrode connected to the output of the amplifier 232, and further connected to the gate electrode of the transistor 247. The capacitor 250 includes a terminal connected to the drain electrodes of the transistors 246 and 248 and a terminal connected to the gate electrodes of the transistors 246 and 248. The capacitor 250 includes a terminal connected to the ground reference voltage and a terminal connected to the gate electrodes of the transistors 247 and 249.

The transistors of the source followers of the error circuit 124 are matched. In addition, the transistors of the clamp circuit 122 and the regulation circuit 120 are matched. In particular, the transistor 240 is matched with the transistor 244 and the transistor 243 is matched with the transistor 245. Furthermore, the transistor 246 is matched with the transistor 248, and the transistor 247 is matched with the transistor 249. For example, in some embodiments, each of these transistor pairs is matched with a ratio of K: 1. That is, the size of the transistor 246 is K times the size of the transistor 248. Similarly, the size of the transistor 247 is K times the size of the transistor 249, the size of the transistor 242 is K times the size of the transistor 244, and the size of the transistor 243 is K times the size of the transistor 245. By sizing the transistors in this way, the clamping circuit 122 and regulation circuit 124 are able to individually perform clamp and regulation operations, respectively. This allows for improved regulation of the clamping function while also protecting the controller IC 101 from defects at the pin 105 or other conditions that cause a short circuit.

To illustrate, in operation the positive output electrode and the negative output electrode of the amplifier 230 each generate a current, designated $I_{diffp}$ and $I_{diffn}$, respectively. The difference between the currents $I_{diffp}$ and $I_{diffn}$, is directly proportional to the difference in magnitudes of the voltage VREF and the feedback signal FB. That is, the difference between the currents $I_{diffp}$ and $I_{diffn}$ indicates the error in the feedback signal FB relative to the voltage VREF. The arrangement and configuration of the transistors of the error circuit 224 is such that a current, designated $I_{err}$ is generated at the pin 105, where the value of the current $I_{err}$ is as follows:

$$I_{err} = I_{diffp} - I_{diffn}$$

In addition, the error circuit 124 generates a proportional current at the internal node 255, wherein the value of the current at the internal node 255 is:

$$\frac{I_{err}}{K}$$

The clamping circuit 122 performs its clamping function based on the current at pin 105-that is based on the current $I_{err}$. The regulation circuit 124 performs its regulation function based on the current at the internal node 255, and thus based on the current $I_{err}$ divided by K. In particular, the regulation circuit 124 regulates the clamping feedback loops formed by 1) the arrangement of the amplifier 230 and the transistor 248 (designated clamp loop 233); and 2) the arrangement of the amplifier 232 and the transistor 249 (designated clamp loop 234). Conventionally, a clamp loop is connected directly to external compensation circuitry, and is thus difficult to keep stable, resulting in unpredictable clamping behavior. In the embodiment of FIG. 2, both the clamping function and the regulation function are based on the error indicated by the current $I_{err}$, ensuring that the both the clamping function and regulation function operate properly. However, because the regulation function is based on the current at the internal node 255, the regulation function is independent of the external compensation circuit 115. This enhances the stability of the clamping loops. The clamping function, in contrast, is based on the current at the pin 105 itself, and thus protects the circuitry of the controller IC 101 from defects causing a short at the pin 105.

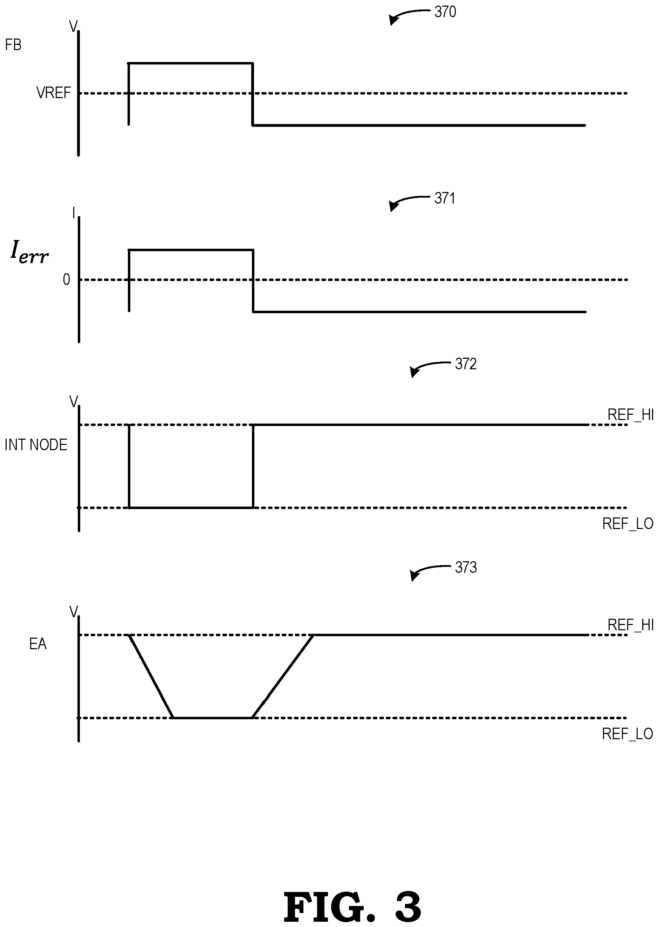

FIG. 3 depicts a set of diagrams, designated diagrams 370-373, wherein each of the diagrams 370-373 illustrates a different signal waveform at the controller IC 101 in accordance with some embodiments. In particular, diagram 370 illustrates an example of the waveform for the voltage for the feedback signal FB over time. Diagram 371 illustrates a corresponding example of the waveform for the current $I_{err}$ over time. The diagram 372 illustrates the corresponding voltage at the internal node 355 over time. The diagram 373 illustrates the corresponding voltage of the error signal EA (at the pin 105) over time.

As shown in the example of FIG. 3, and by the diagram 370, over time the feedback signal FB moves from a relatively high voltage to a relatively low voltage, depending on whether the voltage VOUT is greater than a higher limit of a specified voltage range or less than a lower limit of the specified voltage range. As shown by the diagram 371, the magnitude of the current $I_{err}$ varies over time according to the magnitude of the feedback signal FB. Thus, when the feedback signal FB is at relatively high level, the current $I_{err}$ is at a relatively high magnitude, and above zero, and when the feedback signal FB is at relatively low level, the current $I_{err}$ is at a relatively low magnitude and below zero. As shown by diagram 372, when the current $I_{err}$ is above zero, the voltage at the internal node 255 is set to voltage REF_LO, and when the current $I_{err}$ is below zero, the voltage at the internal node 255 is set to voltage REF_HI. Furthermore, as shown by diagram 373, when the current $I_{err}$ is above zero, the voltage at the pin 105 (that is, the voltage of the error signal EA) ramps to the voltage REF_LO, and when the current $I_{err}$ is below zero, the voltage at the pin 105 ramps the voltage REF_LO.

Thus, as shown by the diagrams 370-373, the configuration of the clamping circuit 122 and the regulation circuit 124 is such that the clamping function and regulation function are based on waveforms having similar characteristics over time, ensuring that each function correctly governs the operation of the feedback loop at the controller IC 101. However, the clamping function and regulation function are based on the voltage or current at different nodes (the pin 105 and the internal node 155). This allows the regulation circuit 124 to support relatively easy stabilization of the clamping circuit loops for a wide variety of external compensation circuits, and further allows the clamping circuit 122 to provide robust protection for defects at the pin 105.

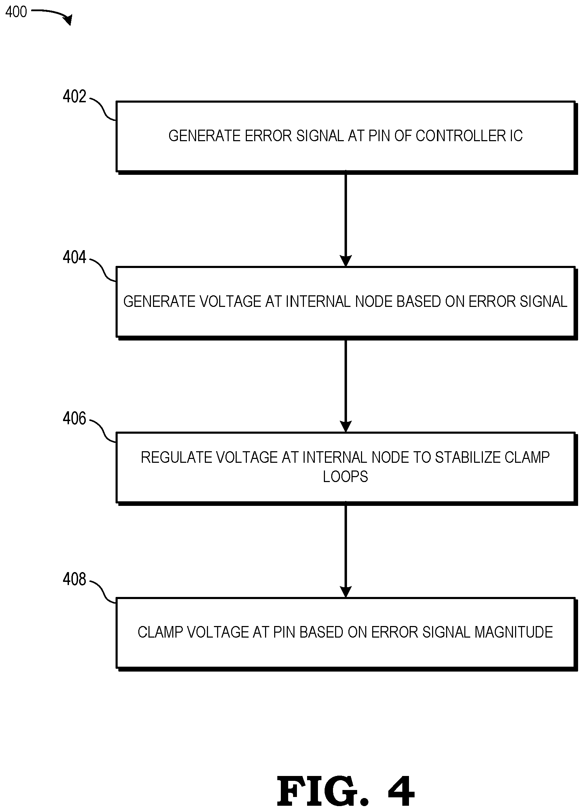

FIG. 4 illustrates a flow diagram of a method 400 of providing regulation and clamping functions at a DC-DC converter in accordance with some embodiments. For purposes of description, the method 400 is described with respect to an example implementation at the controller IC 101 of FIG. 1, but it will be appreciated that in other embodiments the method 400 is implemented at controller ICs or other DC-DC converter systems having a different configuration.

At block 402, the controller IC 101 generates the error signal EA at the pin 105. In at least some embodiments, the error signal EA is based on the feedback signal FB, and reflects a difference between the output voltage VOUT and a specified voltage. The integrator 102 determines the difference between the feedback signal FB and the reference voltage VREF and integrates this difference. Based on the difference, the error circuit 124 generates the current $I_{err}$, representing the error signal EA, at the pin 105.

At block 404, the regulation circuit 120 generates a voltage at the internal node 155. The generated voltage is based on the current $I_{err}$. In particular, as described above, the generated voltage is based on the current $I_{err}$ divided by the factor K, where K indicates the matching between the transistors of the regulation circuit 120 and the clamping circuit 122. At block 406, the regulation circuit 120 regulates the voltage at the internal node 155 to stabilize the clamping loops of the controller IC 101. Because the regulation circuit 120 stabilizes the voltage at the internal node 155, rather than the voltage or current at the pin 105, the stabilization is relatively insensitive to the configuration of the external compensation circuit 115, allowing the controller IC 101 to be used with a wide variety of compensation circuits and associated voltage conversion applications.

At block 408 the clamp circuit 122 clamps the voltage at the pin 105. That is, if the voltage at the pin 105 falls outside a specified range, the clamp circuit 122 clamps the voltage to a specified clamp voltage. The clamp circuit 122 thereby protects the circuitry of the controller IC 101 from damage in the event of a short at the pin 105.

In some embodiments, certain aspects of the techniques described above may be implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc , magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed is not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1.  A device, comprising:
    a direct current (DC)-DC converter circuit including a feedback loop, the feedback loop including:

    a clamp circuit configured to clamp an error signal of the DC-DC converter circuit to a specified clamp voltage in response to a magnitude of the error signal exceeding a predetermined threshold; and
    a regulation circuit, different from the clamp circuit, configured to regulate a clamp loop of the DC-DC converter circuit.

2.  The device of claim 1, wherein:

    the DC-DC converter circuit is part of an integrated circuit device; and
    the regulation circuit is configured to regulate a voltage at an internal node of the integrated circuit device.

3.  The device of claim 2, wherein the clamp circuit is configured to clamp the error signal at a pin of the integrated circuit device.

4.  The device of claim 3, wherein the pin of the integrated circuit device is configured to be coupled to an external compensation circuit for the DC-DC converter circuit.

5.  The device of claim 4, wherein the regulation circuit is independent of the external compensation circuit.

6.  The device of any one of claims 3 to 5, wherein the clamp circuit comprises a first source follower circuit, and the regulation circuit comprises a second source follower circuit.

7.  The device of claim 6, wherein the clamp circuit comprises:

    a first transistor including a source electrode coupled to the pin, a drain electrode, and a gate electrode; and

a second transistor including a source electrode coupled to the pin, a gate electrode, and a drain electrode coupled to a ground voltage reference.

8. The device of claim 7, wherein the regulation circuit comprises:

a third transistor including a source electrode coupled to the internal node, a drain electrode coupled to the drain electrode of the first transistor, and a gate electrode coupled to the gate electrode of the first transistor; and
a fourth transistor including a source electrode coupled to the internal node, a drain electrode coupled to the ground voltage reference, and a gate electrode coupled to the gate electrode of the second transistor.

9. The device of claim 8, wherein the regulation circuit further comprises:
a first amplifier including an input to receive a first voltage reference, an input coupled to the internal node, and an output connected to the gate electrode of the third transistor and the gate electrode of the first transistor.

10. The device of claim 9, wherein the regulation circuit further comprises:
a second amplifier including an input to receive a second voltage reference, an input coupled to the internal node, and an output connected to the gate electrode of the fourth transistor and the gate electrode of the second transistor.

11. The device of claim 9 or 10, further comprising:

a fifth transistor including a source electrode, a drain electrode coupled to the internal node electrode of the first transistor, and a gate electrode coupled to a first output of an integrator;
a sixth transistor including a source electrode coupled to the internal node, a drain electrode, and a gate electrode coupled to a second output of the integrator;
a seventh transistor including a source electrode coupled to the source electrode of the fifth transistor, a drain electrode coupled to the pin, and a gate electrode coupled to the first output of the integrator;
an eighth transistor including a source electrode coupled to the pin, a drain electrode coupled to the drain electrode of the sixth transistor, and a gate electrode coupled to the second output of the integrator;
a ninth transistor including a source electrode coupled to the source electrode of the fifth transistor, a drain electrode coupled to the first output of the integrator, and a gate electrode coupled to the first output of the integrator; and
an eighth transistor including a source electrode coupled to second output of the integrator, a drain electrode coupled to the drain electrode of the sixth transistor, and a gate electrode coupled to the second output of the integrator.

12. The device of any one of claims 8 to 11, wherein the first and third transistors are matched by a ratio of K:1 and the second and fourth transistors are matched by the ratio of K:1.

13. A method, comprising:

converting a first direct current to a second direct current at a DC-DC converter circuit including a feedback loop;
clamping, at a clamp circuit, an error signal at the DC-DC converter circuit in response to a magnitude of the error signal exceeding a predetermined threshold; and
regulating, at a regulation circuit different from the clamp circuit, a voltage at a clamp loop of the DC-DC converter circuit.

**Amended claims in accordance with Rule 137(2) EPC.**

1. A device, comprising:
a direct current (DC)-DC converter circuit (100) including a feedback loop, the feedback loop including:

a clamp circuit (122) configured to clamp an error signal of the DC-DC converter circuit (100) to a specified clamp voltage in response to a magnitude of the error signal exceeding a predetermined threshold; and
a regulation circuit (120), different from the clamp circuit (122), configured to regulate a clamp loop of the DC-DC converter circuit;

wherein:

the DC-DC converter circuit (100) is part of an integrated circuit device;
the regulation circuit (120) is configured to regulate a voltage at an internal node (255) of the integrated circuit device;
the clamp circuit (122) is configured to clamp the error signal at a pin (105) of the integrated circuit device;
the clamp circuit (122) comprises:

a first transistor (246) including a source electrode coupled to the pin (105), a drain electrode, and a gate electrode; and
a second transistor (247) including a source electrode coupled to the pin (105), a gate electrode, and a drain electrode coupled to a ground voltage reference;

the reference circuit (120) comprises:

a third transistor (248) including a source electrode coupled to the internal node (255), a drain electrode coupled to the drain electrode of the first transistor (246), and a gate electrode coupled to the gate electrode of the first transistor;
a fourth transistor (249) including a source electrode coupled to the internal node (255), a drain electrode coupled to the ground voltage reference, and a gate electrode coupled to the gate electrode of the second transistor (247); and
a first amplifier (230) including an input to receive a first voltage reference, an input coupled to the internal node (255), and an output connected to the gate electrode of the third transistor (248) and the gate electrode of the first transistor (246); and

the clamp loop comprises the first amplifier (230) and the third transistor (248).

2. The device of claim 1, wherein the pin (105) of the integrated circuit device is configured to be coupled to an external compensation circuit (115) for the DC-DC converter circuit (100).

3. The device of claim 2, wherein the regulation circuit (120) is independent of the external compensation circuit (115).

4. The device of any one of claims 1 to 3, wherein the clamp circuit (122) comprises a first source follower circuit, and the regulation circuit (120) comprises a second source follower circuit.

5. The device of any one of claims 1 to 4, wherein the regulation circuit (120) further comprises:
a second amplifier (232) including an input to receive a second voltage reference, an input coupled to the internal node (255), and an output connected to the gate electrode of the fourth transistor (249) and the gate electrode of the second transistor (247).

6. The device of any one of claims 1 to 5, further comprising:

a fifth transistor (244) including a source electrode, a drain electrode coupled to the internal node (255), and a gate electrode coupled to a first output of an integrator (102);
a sixth transistor (245) including a source electrode, a drain electrode coupled to the internal node (255), and a gate electrode coupled to a second output of the integrator (102);
a seventh transistor (242) including a source electrode coupled to the source electrode of the fifth transistor (244), a drain electrode coupled to the pin (105), and a gate electrode coupled to the first output of the integrator (102);
an eighth transistor (243) including a source electrode coupled to the source electrode of the sixth transistor (245), a drain electrode coupled to the pin (105), and a gate electrode coupled to the second output of the integrator (102);
a ninth transistor (240) including a source electrode coupled to the source electrode of the fifth transistor (244), a drain electrode coupled to the first output of the integrator (102), and a gate electrode coupled to the first output of the integrator; and
a tenth transistor including a source electrode coupled to the source electrode of the sixth transistor (245), a drain electrode coupled to the second output of the integrator (102), and a gate electrode coupled to the second output of the integrator.

7. The device of any one of claims 1 to 6, wherein the first and third transistors (246, 248) are matched by a ratio of K:1 and the second and fourth transistors (247, 249) are matched by the ratio of K:1.

8. A method, comprising:

converting a first direct current to a second direct current at a DC-DC converter circuit (100) including a feedback loop;
clamping, at a clamp circuit (122), an error signal at the DC-DC converter circuit (100) in response to a magnitude of the error signal exceeding a predetermined threshold; and
regulating, at a regulation circuit (120) different from the clamp circuit (122), a voltage at a clamp loop of the DC-DC converter circuit (100);

wherein:

the DC-DC converter circuit (100) is part of an integrated circuit device;
the regulation circuit (120) is configured to regulate a voltage at an internal node (255) of the integrated circuit device;
the clamp circuit (122) is configured to clamp the error signal at a pin (105) of the integrated circuit device;
the clamp circuit (122) comprises:

a first transistor (246) including a source electrode coupled to the pin (105), a drain electrode, and a gate electrode; and
a second transistor (247) including a source electrode coupled to the pin (105), a gate electrode, and a drain electrode coupled to a ground voltage reference;

the reference circuit (120) comprises:

a third transistor (248) including a source electrode coupled to the internal node (255), a drain electrode coupled to the drain electrode of the first transistor (246), and a gate electrode coupled to the gate electrode of the first transistor;
a fourth transistor (249) including a source electrode coupled to the internal node (255), a drain electrode coupled to the ground voltage reference, and a gate electrode coupled to the gate electrode of the second transistor (247); and
a first amplifier (230) including an input to receive a first voltage reference, an input coupled to the internal node (255), and an output connected to the gate electrode of the third transistor (248) and the gate electrode of the first transistor (246); and

the clamp loop comprises the first amplifier (230) and the third transistor (248).

100

CONTROLLER IC
101

NODE CONTROL
104

REGULATION CIRCUIT
120

CLAMP CIRCUIT
122

INTEGRATOR
102

ERROR CIRCUIT
124

EA

105

VREF

V_IN

V_OUT

PW MODULATOR
106

COMMUTATION CELL
108

LC CIRCUIT
110

FB

EXTERNAL COMPENSATION
115

## FIG. 1

FIG. 2

FIG. 3

400

402

GENERATE ERROR SIGNAL AT PIN OF CONTROLLER IC

404

GENERATE VOLTAGE AT INTERNAL NODE BASED ON ERROR SIGNAL

406

REGULATE VOLTAGE AT INTERNAL NODE TO STABILIZE CLAMP LOOPS

408

CLAMP VOLTAGE AT PIN BASED ON ERROR SIGNAL MAGNITUDE

# FIG. 4

Europäisches
Patentamt

European
Patent Office

Office européen
des brevets

## EUROPEAN SEARCH REPORT

**Application Number**

EP 24 30 6665

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/278147 A1 (REGVAR FLORIAN [AT] ET AL) 27 September 2018 (2018-09-27) <br> * paragraph [0002] - paragraph [0017] * <br> * paragraph [0028] - paragraph [0053] * <br> * figures 1-4 * | 1-13 | INV. <br> H02M1/00 <br> H02M1/32 <br> H02M3/156 |
| A | US 2006/017504 A1 (DEVAL PHILIPPE [CH] ET AL) 26 January 2006 (2006-01-26) <br> * paragraph [0020] - paragraph [0023] * <br> * figure 2 * | 1-13 | |
| A | US 2024/113622 A1 (YOKOYAMA NOBUYUKI [JP] ET AL) 4 April 2024 (2024-04-04) <br> * figure 1 * | 1-13 | |

**TECHNICAL FIELDS SEARCHED (IPC)**

H02M
H03F

The present search report has been drawn up for all claims

| Place of search | Date of completion of the search | Examiner |
|---|---|---|
| The Hague | 26 February 2025 | Lochhead, Steven |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**EP 4 726 983 A1**

## ANNEX TO THE EUROPEAN SEARCH REPORT
## ON EUROPEAN PATENT APPLICATION NO.

EP 24 30 6665

26-02-2025

| Patent document cited in search report | Publication date | Patent family member(s) | Publication date |
|---|---|---|---|
| US 2018278147 A1 | 27-09-2018 | DE 102017205127 A1<br>US 2018278147 A1 | 27-09-2018<br>27-09-2018 |
| US 2006017504 A1 | 26-01-2006 | NONE | |
| US 2024113622 A1 | 04-04-2024 | JP 2024053910 A<br>US 2024113622 A1 | 16-04-2024<br>04-04-2024 |

EPO FORM P0459